Europäisches Patentamt

European Patent Office

Office européen des brevets

(19)

(11) Veröffentlichungsnummer : **0 175 121**
**B1**

(12) # EUROPÄISCHE PATENTSCHRIFT

(45) Veröffentlichungstag der Patentschrift :
29.07.87

(51) Int. Cl.⁴ : **B 60 K 37/00**

(21) Anmeldenummer : **85109872.3**

(22) Anmeldetag : **06.08.85**

(54) **Instrumententafel für Kraftfahrzeuge.**

(30) Priorität : **16.08.84 DE 3430121**

(43) Veröffentlichungstag der Anmeldung :
**26.03.86 Patentblatt 86/13**

(45) Bekanntmachung des Hinweises auf die Patenterteilung : **29.07.87 Patentblatt 87/31**

(84) Benannte Vertragsstaaten :
**DE FR GB IT SE**

(56) Entgegenhaltungen :
**DE-A- 2 230 775**
**FR-A- 2 385 554**

(73) Patentinhaber : **Gebr. Happich GmbH**
**Postfach 10 02 49 Clausenbrücke 1**
**D-5600 Wuppertal 1 (DE)**

(72) Erfinder : **Mahler, Gert**
**Kreuzstrasse 5**
**D-5608 Radevormwald (DE)**
Erfinder : **Dietz, Günter**
**Zum Lohbusch 44 C**
**D-5600 Wuppertal 1 (DE)**
Erfinder : **Falkenroth, Heinz-Jürgen**
**Körnerstrasse 8**
**D-5828 Ennepetal 1 (DE)**

## Beschreibung

Die Erfindung bezieht sich auf eine Instrumentafel für Kraftfahrzeuge, die an einem sich unterhalb der Windschutzscheibe über die Wagenbreite erstreckenden starren Kastenträger der Fahrzeugkarosserie befestigbar ist.

In der DE-A-2 230 775 ist ein Armaturenbrett für Kraftfahrzeuge mit einer Armaturentafel der vorstehend beschriebenen Art beschrieben, an deren Rückseite ein flächiges Bauteil befestigt ist, welches zusammen mit der Armaturentafel einen als Luftleitkanal dienenden Hohlraum bildet, der mit in der Armaturentafel ausgebildeten Scheibendefrosterdüsen in Verbindung steht. Dieses Armaturenbrett soll sich dadurch auszeichnen, daß das flächige Bauteil ein offenes, nicht in die Karosserie integriertes, unter dem vorderen Bereich der aus nachgiebigem Werkstoff bestehenden Armaturentafel, in dem die Scheibendefrosterdüsen angeordnet sind, angebrachtes Profilteil aus elastischem Werkstoff ist, welches nach Zusammenfügen mit der Armaturentafel einen die vormontierbare Baugruppe versteifenden Luftleitkanal bildet. Das bekannte Armaturenbrett setzt sich also aus einer Armaturentafel und einem Profilteil zusammen. Diese Teile müssen nun aber in separaten Fertigungsvorrichtungen einzeln hergestellt und nach der Herstellung unter Zuhilfenahme entsprechender Montagevorrichtungen zusammengefügt werden.

Der Erfindung liegt demgegenüber die Aufgabe zugrunde, eine Instrumententafel der eingangs genannten Art durch Verzicht auf einen mehrteiligen Aufbau besonders einfach und kostengünstig aber dennoch so stabil auszubilden, daß sie die erforderliche Steifigkeit aufweist, um sie mit Armaturen vormontiert einbauen und mit wenigen Befestigungselementen am starren Kastenträger befestigen zu können.

Diese Aufgabe wird erfindungsgemäß dadurch gelöst, daß die Instrumententafel als Kunststoff-Spritzgußteil ausgebildet ist und an der Rückseite mindestens zwei einstückig angeformte Rippen aufweist, deren freie Randkanten auf dem Kastenträger abstützbar sind und zusammen mit diesem mindestens einen mit Scheibendefrosterdüsen in Verbindung stehenden Luftleitkanal bilden.

Der besondere Vorteil der Erfindung ist zunächst darin zu sehen, daß die komplette Instrumententafel einstückig und dabei noch werkzeugfallend herstellbar ist. Durch diese sich insbesondere auch auf die Rippen erstreckende einstückige Ausbildung ergeben sich gegenüber dem Stand der Technik beträchtliche Einsparungen, und zwar in bezug auf den Einsatz von Material, Arbeit, Zeit und Maschinen. Den erfindungsgemäß einstückig an die Instrumententafel angeformten Rippen obliegt eine Doppelfunktion, denn sie bilden zum einen, zusammen mit dem ohnehin vorhandenen starren Kastenträger der Fahrzeugkarosserie den benötigten Luftleitkanal und zum anderen geben sie der Instrumententafel die erforderliche Festigkeit bzw. Versteifung. Da der Luftleitkanal erst im Augenblick der Montage der Instrumententafel durch Aufsetzen der Randkanten der Rippen auf den Kastenträger geschlossen und damit vervollkommnet wird, ist die Instrumententafel in bezug auf die Vormontage von Instrumenten besonders montagefreundlich ; denn es gibt keine geschlossene und damit unzugängliche Hohlräume.

Vorzugsweise ist zwischen den freien Randkanten der Rippen und dem Kastenträger jeweils eine Dichtung angeordnet. Dabei kann vorgesehen sein, daß an den Rippen, deren freie Randkanten überragende Dichtungsleisten befestigt sind. Von besonderem Vorteil ist es, wenn gemäß einer weiteren erfindungsgemäßen Maßnahme vorgesehen wird, als Dichtung eine auf dem Kastenträger angeordnete Dämmschicht, in die die freien Randkanten der Rippen eindrückbar sind, zu verwenden.

Weiterhin kann vorgesehen sein, daß mindestens eine der Rippen eine Öffnung zum Anschließen einer Luft-Zufuhrleitung aufweist. Eine solche Öffnung läßt sich bei der Herstellung der Instrumententafel unmittelbar ausformen, so daß Nachbearbeitungsmaßnahmen entfallen. Auch kann an die Öffnung ein Anschlußstutzen für eine Schlauchleitung oder dgl. vormontiert werden, wodurch sich eine vereinfachte Montage ergibt.

Eine weitere erfindungsgemäße Maßnahme besteht darin, daß an den Rippen Winkelstücke oder dgl. Halteelemente angeordnet sind, die vorzugsweise mit unverlierbar vormontierten Schrauben zum Befestigen der Instrumententafel am kastenträger ausgerüstet sind. Die Halteelemente können dabei ebenfalls vormontiert, d. h. vor dem Einbau der Instrumententafel an dieser z. B. durch Nieten befestigt werden. Die die Schrauben tragenden Schenkel der Halteelemente sollten innerhalb des durch die Rippen gebildeten Kanals angeordnet sein, weil sich hierdurch vorteilhafterweise die Möglichkeit ergibt, sie mit einem durch die Scheibendefrosterdüsen hindurchzuführenden Schraubendreher anziehen und, falls erforderlich, auch lösen zu können.

Die als Kunststoff-Spritzgußteil ausgebildete Instrumententafel kann außenseitig eine aus Schaumkunststoff oder dgl. bestehende Polsterauflage tragen, wobei die Polsterauflage vozugsweise unmittelbar auf den Spritzgußkörper aufgeschäumt wird.

Ein Ausführungsbeispiel der Erfindung wird nachfolgend anhand der Zeichnung näher erläutert. Es zeigen :

Figur 1 eine Draufsicht auf die Instrumententafel,

Figur 2 eine Ansicht der Instrumententafel gemäß Richtungspfeil II,

Figur 3 einen Schnitt, etwa folgend der Linie III-III in Fig. 1,

Figur 4 bis 6 jeweils eine Einzelheit der Erfindung.

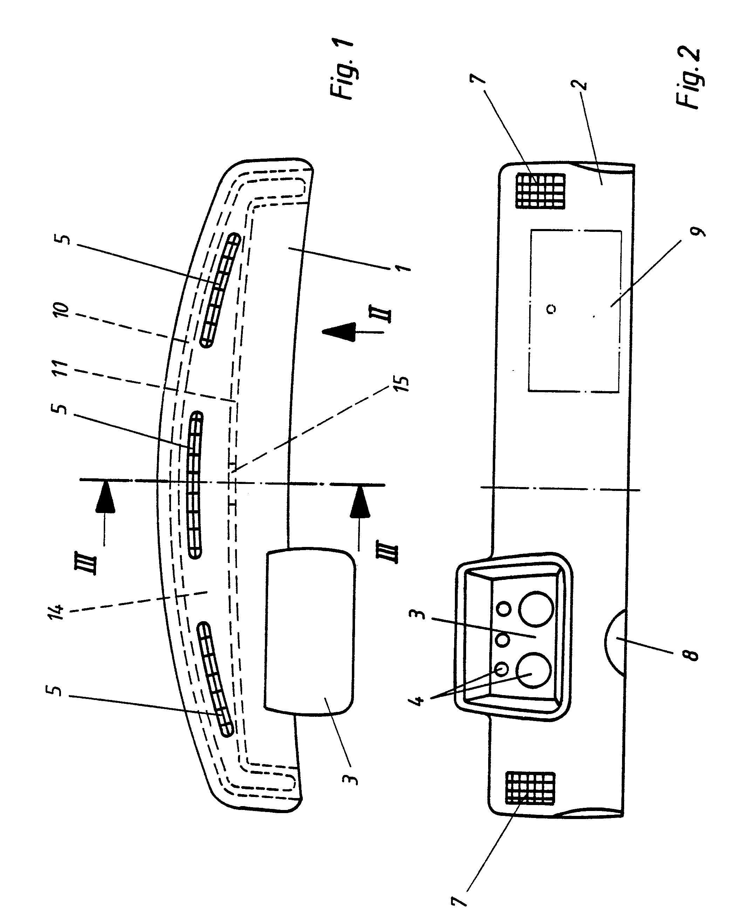

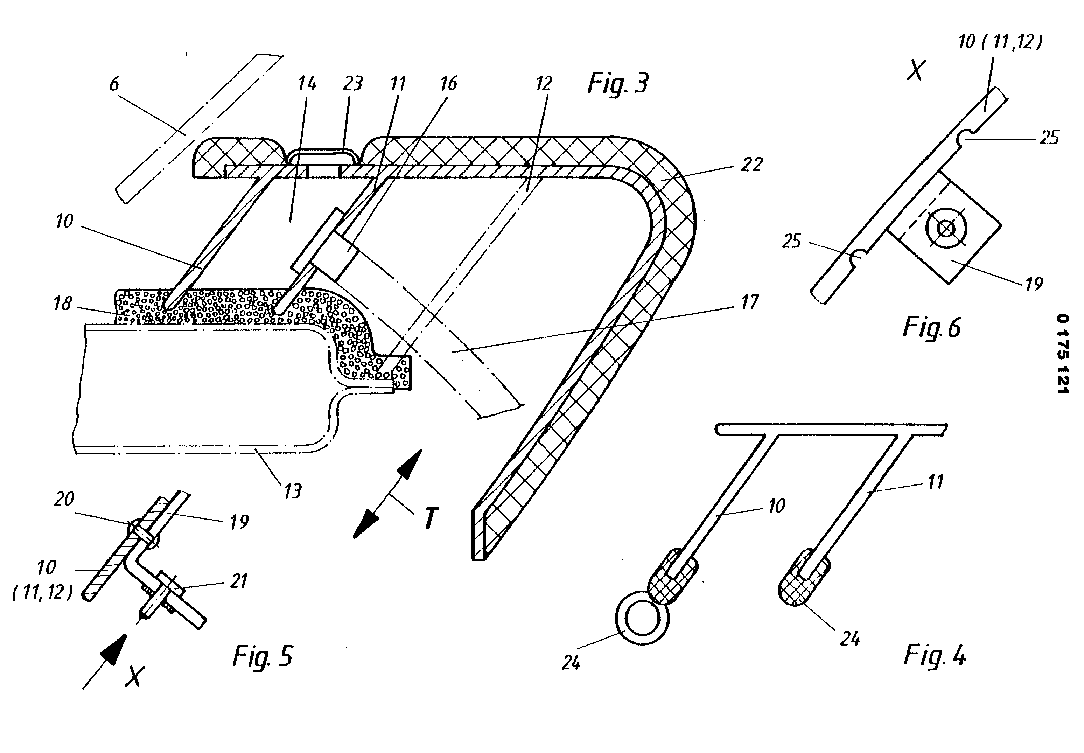

Die in Fig. 1 und 2 gezeigte Instrumententafel weist eine Oberseite 1, eine Frontseite 2 und eine übliche Hutze 3 mit Öffnungen 4 zum Einbau von Instrumenten · auf. Die Oberseite 1 ist mit Öffnungen ausgebildet, die als Defrosterdüsen 5 dienen und dazu bestimmt sind, der in Fig. 3 strichpunktiert angedeuteten Windschutzscheibe 6 Luft, insbesondere klimatisierte Luft zuzuführen. An den Endbereichen der Frontseite 2 sind weitere Defrosterdüsen 7 vorgesehen, die es ermöglichen sollen auch den Seitenscheiben eines Fahrzeuges Luft zuzuführen. Die Instrumententafel weist am unteren Randbereich der Frontseite 2 eine Ausnehmung 8 für eine nicht gezeigte Lenksäule auf und sie kann, wie in Fig. 2 mit strichpunktierten Linien angedeutet, mit einem Handschuhfach und einem davorgesetzten Deckel 9 ausgerüstet sein.

Die Instrumententafel ist in der einfachsten Ausführungsform als einstückiges Kunststoff-Spritzgußteil ausgebildet und sie weist dabei an ihrer Rückseite einstückig und materialeinheitlich angeformte Rippen 10 und 11 auf. Im Normalfall sind nur zwei Rippen 10 und 11 vorgesehen, die einen sich über die Längenausdehnung der Instrumententafel erstreckenden Kanal bilden. Durch die Anformung einer dritten lediglich strichpunktiert angedeuteten Rippe 12 ergeben sich dann zwei nebeneinander verlaufende Kanäle.

Wie Fig. 3 erkennen läßt, sind die Rippen 10, 11, 12 nicht rechtwinklig zur Oberseite 1 der Instrumententafel ausgerichtet, sondern vielmehr dem Richtungsverlauf der schürzenartig heruntergezogenen Frontseite 2 der Instrumententafel angepaßt. Diese Gestaltungsform ermöglicht es, die Instrumententafel mit einem relativ einfach ausgebildeten Spritzgußwerkzeug, bestehend aus einer oberen und einer unteren Formhälfte herzustellen und die fertig gespritzte Instrumententafel besonders einfach zu entformen, indem die Werkzeughälften in Richtung des Doppelpfeils T auseinanderbewegt werden.

Durch das Anformen der Rippen 10 und 11 und ggf. der Rippe 12 erhält die Instrumententafel zum einen eine selbsttragende Steifigkeit und Stabilität, die es ermöglicht, sie zusammen mit vormontierten Instrumenten in ein Fahrzeug einzubauen. Zum anderen erhält die Instrumententafel durch die angeformten Rippen 10 und 11 (sowie ggf. 12) zumindest einen mit den Defrosterdüsen 7 in Verbindung stehenden Kanal, der nach der Montage der Instrumententafel durch einen zur Fahrzeugkarosserie gehörenden starren Kastenträger 13 zu einem Luftleitkanal 14 vervollständigt wird, indem sich die freien Randkanten der Rippen 10 und 11 auf den Kastenträger 13 abstützen und damit den Kanal schließen. Es versteht sich, daß der Abstand und die Höhe der Rippen 10 und 11 (und ggf. 12) derart zu bestimmen und zu bemessen ist, wie es der gewünschte Luftdurchsatz verlangt. Ebenso versteht es sich, daß die Rippen 10, 11 und 12 nicht notwendigerweise parallel zueinander verlaufend ausgerichtet sein müssen.

Die Rippe 11 weist im mittleren Bereich der Instrumententafel eine Öffnung 15 (fig. 1) und eine darin eingesetzte und befestigte Buchse 16 (Fig. 3) zum Anschluß einer mit strichpunktierten Linien angedeuteten Luft-Zufuhrleitung 17 auf. Im Luftzufuhrbereich besitzt der Luftleitkanal 14 (vgl. Fig. 1) eine relativ große Querschnittsöffnung, die in Richtung zu den Defrosterdüsen 7 hin allmählich abnimmt.

Damit die Luft möglichst verlustfrei zu den Fahrzeugscheiben hingeführt wird, empfiehlt sich eine dichte Anlage der freien Randkanten der Rippen 10 bis 12 am Kastenträger 13. Sofern der Kastenträger 13, wie es häufig der Fall ist, mit einer Dämmschicht 18 (Antidröhnbeschichtung oder dgl.) versehen ist, kann durch Eindrücken der Rippenrandkanten in die Dämmschicht 18 eine zuverlässige Abdichtung ohne zusätzliche Teile erzielt werden (vgl. Fig. 3). Andernfalls werden an den freien Randkantenbereichen der Rippen 10, 11 und ggf. 12 Dichtleisten 24 z. B. durch Aufstecken befestigt. In Fig. 4 sind unterschiedlich ausgebildete Dichtleisten 24 nur beispielsweise dargestellt.

Zur Befestigung der Instrumententafel am Kastenträger 13 können Winkellaschen 19 oder dgl. Befestigungselemente dienen, die ihrerseits an den Rippen z. B. durch Nieten 20 befestigt sind. An den befestigungselementen sind die zur Befestigung der Instrumententafel am Kastenträger 13 benötigten Schrauben 21 zweckmäßigerweise vormontiert. Die Schrauben 21 können mit üblichen, durch die Defrosterdüsen 5 hindurchzuführende Schraubendreher in Bohrungen des Kastenträgers 13 eingedreht werden.

Für eine gehobene Fahrzeugausstattung ist die Instrumententafel außenseitig mit einer Polsterauflage 22 ausgerüstet, die aus Schaumkunststoff bestehen und unmittelbar auf den Spritzgußkörper, der ggf. mit einem Haftvermittler beschichtet ist, aufgeschäumt sein kann. In diesem Fall sind die Defrosterdüsen 5 auch mit gitterartige Durchlaßöffnungen aufweisenden Rosetten 23 verkleidet.

Eine Besonderheit der Erfindung, nämlich die Rippen 10, 11 und 12 mit Rillen 25 auszubilden (statt der Rillen können auch Schlitze vorgesehen sein), ist in Fig. 6 gezeigt. Diese Rillen 25 sind links und rechts neben jeder Winkellasche 19 vorgesehen und sie erstrecken sich in Entformungsrichtung T. Durch die Rillen 25 (oder Schlitze) ergeben sich geschwächte Abschnitte, die so ausgebildet sind, daß sie die Absorption und Dissipation von Aufprallenergie aufgrund des durch die Schwächung verminderten Verformungs- und Bruchwiderstandes der genannten Bereiche der Instrumententafel verbessern.

**Patentansprüche**

1. Instrumententafel für Kraftfahrzeuge, die an einem sich unterhalb der Windschutzscheibe (6) über die Wagenbreite erstreckenden starren Kastenträger (13) der Fahrzeugkarosserie befestigbar ist, dadurch gekennzeichnet, daß die Instrumententafel als Kunststoff-Spritzgußteil ausgebildet ist und an der Rückseite mindestens zwei einstückig angeformte Rippen (10, 11, 12) aufweist, deren freie Randkanten auf dem Kastenträger (13) abstützbar sind und zusammen mit diesem mindestens einen mit Scheibendefrosterdüsen (5, 7) in Verbindung stehenden Luftleitkanal (14) bilden.

2. Instrumentafel nach Anspruch 1, dadurch gekennzeichnet, daß zwischen den freien Randkanten der Rippen (10, 11, 12) und dem Kastenträger (13) jeweils eine Dichtung angeordnet ist.

3. Instrumententafel nach Anspruch 1 oder 2, dadurch gekennzeichnet, daß an den Rippen (10, 11, 12), deren freie Randkanten überragende Dichtungsleisten (24) befestigt sind.

4. Instrumententafel nach Anspruch 1 oder 2, dadurch gekennzeichnet, daß als Dichtung eine auf dem Kastenträger (13) angeordnete Dämmschicht (18), in die die freien Randkanten der Rippen (10, 11, 12) eindrückbar sind, verwendet wird.

5. Instrumententafel nach einem oder mehreren der Ansprüche 1 bis 4, dadurch gekennzeichnet, daß mindestens eine der Rippen (10, 11, 12) ein Öffnung (15) zum Anschließen einer Luft-Zufuhrleitung (17) aufweist.

6. Instrumententafel nach einem oder mehreren der Ansprüche 1 bis 5, dadurch gekennzeichnet, daß an den Rippen (10, 11, 12) Winkelstücke oder dgl. Halteelemente (19) angeordnet sind, die vorzugsweise mit unverlierbar vormontierten Schrauben (21) zum Befestigen der Instrumententafel am Kastenträger (13) ausgerüstet sind.

7. Instrumententafel nach einem oder mehreren der Ansprüche 1 bis 6, dadurch gekennzeichnet, daß die Instrumententafel außenseitig eine aus Schaumkunststoff oder dgl. bestehende Polsterauflage (22) trägt.

8. Instrumententafel nach einem oder mehreren der Ansprüche 1 bis 7, dadurch gekennzeichnet, daß die Rippen (10, 11, 12) Rillen (25) oder Schlitze aufweisen.

9. Instrumententafel nach Anspruch 8, dadurch gekennzeichnet, daß die Rillen (25) oder Schlitze sich parallel zur Entformungsrichtung (Doppelpfeil T) erstrecken.

10. Instrumententafel nach Anspruch 8 oder 9, dadurch gekennzeichnet, daß die Winkellaschen 19 oder dgl. jeweils zwischen zwei Rillen (25) oder Schlitzen an den Rippen (10, 11, 12) befestigt sind.

## Claims

1. A dashboard for a motor vehicle fastenable to a rigid box girder (13) of the vehicle body, the box girder being located underneath the windscreen (6) and extending over the width of the vehicle, characterized in that the dashboard is an injection-moulded plastics article provided at its rear with at least two integrally moulded fins (10, 11, 12) the free end portions of which are supportable on the box girder, and in that the fins together with the box girder form at least one air duct (14) communicating with the windscreen and/or side window's defroster nozzles (5, 7).

2. A dashboard according to claim 1, characterized in that a seal is arranged between the respective free end portions of the fins (10, 11, 12) and the box girder (13).

3. A dashboard according to claim 1 or claim 2, characterized in that a sealing ledge (24) is fastened to each of the fins (10, 11, 12) and protrudes beyond the free end portion thereof.

4. A dashboard according to claim 1 or claim 2, characterized in that a noise-suppressing sheath (18) arranged on the box girder (13) is used as a seal, and in that the respective free end portions of the fins (10, 11, 12) are pressable into the sheath.

5. A dashboard according to any one or more of the claims 1 to 4, characterized in that at least one of the fins (10, 11, 12) is provided with an aperture (15) for connecting an air feed duct thereto.

6. A dashboard according to any one or more of the claims 1 to 5, characterized in that elbows or like holding means (19) are secured to the respective fins (10, 11, 12) and, preferably, are provided with screws (21) which are undetachably pre-fitted therein and which serve for fastening the dashboard to the box girder (13).

7. A dashboard according to any one or more of the claims 1 to 6, characterized in that the dashboard's outer surface is covered by padding (22) of a foamed plastics substance.

8. A dashboard according to any one or more of the claims 1 to 7, characterized in that the fins (10, 11, 12) are provided with grooves (25) or slots.

9. A dashboard according to claim 8, characterized in that the grooves (25) or slots extend parallel to the direction (double arrow T) along which the mould is opened.

10. A dashboard according to claim 8 or claim 9, characterized in that each of the elbows (19) or the like is fastened to the respective fin (10, 11, 12) in the space between two grooves (25) or slots.

## Revendications

1. Planche de bord pour véhicules automobiles, pouvant être fixée à une poutre en caisson (13) rigide de la carrosserie du véhicule s'étendant sur la largeur de la voiture au-dessus du pare-brise (6), caractérisée en ce que la planche de bord est réalisée sous la forme d'un composant de matière plastique moulé par injection et comporte au moins deux nervures (10, 11, 12) formées d'un seul tenant sur la face postérieure, dont les bords libres peuvent s'appuyer sur la poutre en caisson (13) et forment, avec elle, au moins un canal de guidage d'air (14) en liaison avec des buses de dégivrage des vitres glaces (5, 7).

2. Planche de bord selon la revendication 1, caractérisée en ce qu'un joint est placé entre chacun des bords libres des nervures (10, 11, 12) et la poutre en caisson (13).

3. Planche de bord selon la revendication 1 ou 2, caractérisée en ce que des rebords d'étanchéité (24) dépassant de leurs bords libres sont fixés aux nervures (10, 11, 12).

4. Planche de bord selon la revendication 1 ou 2, caractérisée en ce qu'on utilise, comme joint, une couche isolante (18) placée sur la poutre en caisson (13), dans laquelle peuvent être enfoncés les bords libres des nervures (10, 11, 12).

5. Planche de bord selon une ou plusieurs des revendications 1 à 4, caractérisée en ce que l'une au moins des nervures (10, 11, 12) comporte une ouverture (15) pour le raccordement d'une conduite d'amenée d'air (17).

6. Planche de bord selon une ou plusieurs des revendications 1 à 5, caractérisée en ce que des cornières ou des éléments de retenue analogues (19) sont placés sur les nervures (10, 11, 12) et comportent, de préférence, des vis (21) prémontées de façon à être imperdables pour fixer la planche de bord à la poutre en caisson (13).

7. Planche de bord selon une ou plusieurs des revendications 1 à 6, caractérisée en ce que le tableau de bord comporte extérieurement un revêtement de garniture (22) constitué par une mousse synthétique ou une matière analogue.

8. Planche de bord selon une ou plusieurs des revendications 1 à 7, caractérisée en ce que les nervures (10, 11, 12) comportent des sillons (25) ou des fentes.

9. Planche de bord selon la revendication 8, caractérisée en ce que les sillons 25 ou les fentes s'étendent parallèlement à la direction de démoulage (flèche double T).

10. Planche de bord selon la revendication 8 ou 9, caractérisée en ce que les cornières de fixation (19) ou analogues sont fixées sur les nervures (10, 11, 12) dans chaque cas entre deux sillons (25) ou fentes.

Fig. 1

Fig. 2

Fig. 3

Fig. 4

Fig. 5

Fig. 6